# FASCICULE DE BREVET EUROPEEN

(11) **EP 0 503 984 B1**
(45) Date de publication et mention de la délivrance du brevet: **03.05.1995**
(21) Numéro de dépôt: 92400283.5
(22) Date de dépôt: 04.02.1992
(51) Int. Cl.: H01R 11/28, H01M 2/30

(54) **Ensemble de branchement d'un circuit électrique sur les cosses d'un générateur électrochimique de courant continu**
Anordnung zum Anschliessen einer elektrischen Schaltung an die Klemmen eines elektrochemischen Gleichstromerzeugers
Arrangement for connecting an electrical circuit to the terminals of an electrochemical direct current generator

(30) Priorité: 12.03.1991 FR 9102975
(43) Date de publication de la demande: 16.09.1992
(73) Titulaire: AUTOMOBILES PEUGEOT, 75116 Paris (FR); AUTOMOBILES CITROEN, 92200 Neuilly-sur-Seine (FR)
(72) Inventeur: Chaillie, Hubert, F-25200 Montbéliard (FR)
(74) Mandataire: Moncheny, Michel

(56) Documents cités:
- DE-A- 3 514 662
- FR-A- 2 582 447
- US-A- 3 397 382

## Description

La présente invention concerne un ensemble de branchement d'un circuit électrique sur les cosses d'un générateur électrochimique de courant continu ; l'invention s'applique en particulier au branchement du circuit électrique d'un véhicule automobile sur sa batterie.

Lorsque l'on fait un branchement incorrect, c'est-à-dire en inversant les polarités, d'un circuit électrique sur sa source de courant continu, cela peut avoir des conséquences extrêmenent graves, compte tenu de l'introduction de composants électroniques dans le circuit électrique précité. Par exemple, l'inversion de polarité peut entraîner la destruction de certains composants électroniques.

De plus, les circuits électriques alimentés en courant continu comportent très souvent des composants redresseurs, tels que des diodes Zener, ce qui peut entraîner l'apparition d'un court-circuit au niveau du circuit électrique et, par suite, la détérioration de la ligne d'alimentation.

En particulier dans le cas d'un véhicule automobile, certains appareils branchés sur la batterie, tels que l'alternateur ou des boîtiers électroniques, par exemple un auto-radio muni d'une mémoire permanente, créent un court-circuit lors d'un branchement incorrect de la batterie. Cela entraîne une détérioration complète des appareils concernés et une fusion de l'isolant des fils de câblage par échauffement dans un espace de temps court, de l'ordre de deux à trois secondes.

Les éléments électrochimiques d'alimentation en courant continu, en particulier les batteries de véhicule automobile, comportent des cosses légèrement tronconiques sur lesquelles viennent s'engager des douilles dont le profil intérieur est également tronconique (voir p.e. FR-A-2 582 447). Pour distinguer les deux bornes d'alimentation, une des cosses de la batterie présente un diamètre légèrement inférieur, ce qui interdit de réaliser un branchement incorrect, la douille de petit diamètre ne pouvant s'engager complètement sur la cosse de grand diamètre.

Cependant lorsque l'on engage la douille de grand diamètre sur la cosse de petit diamètre, il est difficile de s'apercevoir que le branchement est incorrect, surtout dans le cas où les douilles sont des douilles à serrage. On ne s'aperçoit de l'interversion des douilles que lorsque l'on tente de mettre en place la douille de petit diamètre sur la cosse de grand diamètre.

Il en résulte que si l'on intervertit les douilles de connexion en commençant par mettre en place la douille de grand diamètre sur la cosse de petit diamètre, lorsque l'on mettra en place la douille de petit diamètre sur la cosse de grand diamètre, il s'établira un contact électrique ce qui entraînera les détériorations qui ont été décrites ci-dessus.

La présente invention se propose de fournir un ensemble de connexion sur un générateur électrochimique qui permet d'éviter de réaliser un branchement incorrect lorsque l'on intervertit les douilles.

L'invention a pour objet un ensemble de deux connecteurs comportant des douilles à profil intérieur tronconique et destinés au branchement d'un circuit électrique sur un générateur électrochimique de courant continu qui comporte deux cosses tronconiques dont l'une a un diamètre supérieur au diamètre de l'autre, caractérisé en ce que la douille du connecteur destiné au branchement sur la cosse de plus faible diamètre comporte une garniture isolante qui est fixée sur sa partie inférieure et qui s'étend sur une hauteur au moins égale à la hauteur de pénétration de la douille de petit diamètre sur la cosse de grand diamètre.

De cette manière, il ne peut pas se produire de connexion électrique entre la douille de petit diamètre et la cosse de grand diamètre et, par suite, le branchement incorrect du circuit électrique est évité.

Avantageusement, la garniture isolante précitée est constituée par une rondelle.

Selon un mode de réalisation, le profil intérieur de ladite rondelle est en alignement avec le profil intérieur de la douille dont la partie inférieure présente un épaulement dans lequel est logée ladite rondelle.

Dans le cas où la douille de connexion est constituée par une bague de serrage fendue, la rondelle est également fendue.

D'autres caractéristiques et avantages de l'invention ressortiront de la description qui suit d'un exemple de réalisation de l'invention, faite en se référant aux dessins annexés sur lesquels :
- La figure 1 représente, en vue de profil, une batterie destinée en particulier à un véhicule automobile;
- les figures 2 et 3 représentent, en vue de dessus et en coupe transversale, la douille de grand diamètre mise en place sur la cosse de petit diamètre, et;
- les figures 4 et 5 représentent, en vue de dessus, et en coupe transversale, la douille de petit diamètre placée sur la cosse de grand diamètre.

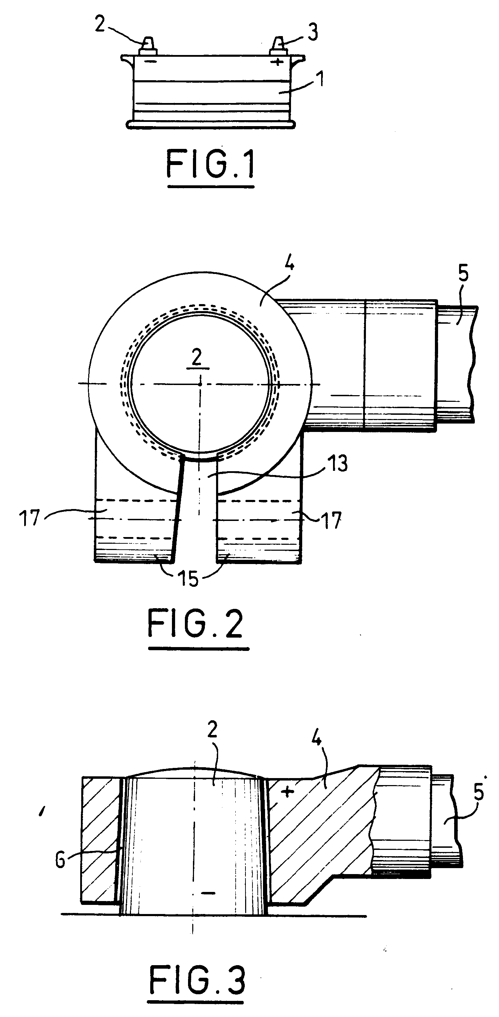

On voit sur la figure 1 une batterie 1 de type classique destinée à alimenter les circuits électriques d'un véhicule automobile. Les cosses ou bornes de raccordement négative 2 et positive 3 présentent un profil normalisé légèrement tronconique, leur conicité étant égale à 1. De manière normalisée également, leurs diamètres sont légèrement différents, la borne négative 2 présentant un diamètre de base légèrement plus faible égal à 17,9 mm alors que le diamètre de base de la borne positive 3 est égal à 19,5 mm.

Les douilles de connexion de l'ensemble de raccordement du circuit électrique du véhicule présentent des profils intérieurs tronconiques correspondants, c'est-à-dire que la douille négative destinée au raccordement sur la borne négative est légèrement plus étroite.

Cette disposition permet de détecter une interversion des douilles de branchement puisque la douille de plus faible diamètre, à savoir la douille négative, ne peut pas s'engager complètement sur la borne positive 3 de la batterie 1.

Cependant, si l'on commence par brancher la douille positive sur la borne négative, comme cela est représenté sur les figures 2 et 3, il est possible que l'on ne s'aperçoive pas qu'il ne s'agit pas de la bonne borne. En effet comme on peut le voir sur les figures 2 et 3, la douille positive 4 auquelle est raccordé un câble d'alimentation 5 peut se mettre en place sur la borne négative 2 et, du fait que la différence relative entre les diamètres des deux bornes est faible, le jeu 6 entre la borne 2 et la douille 4 est faible et il est donc possible que l'opérateur ne se rende pas compte de ce branchement incorrect de la douille positive 4.

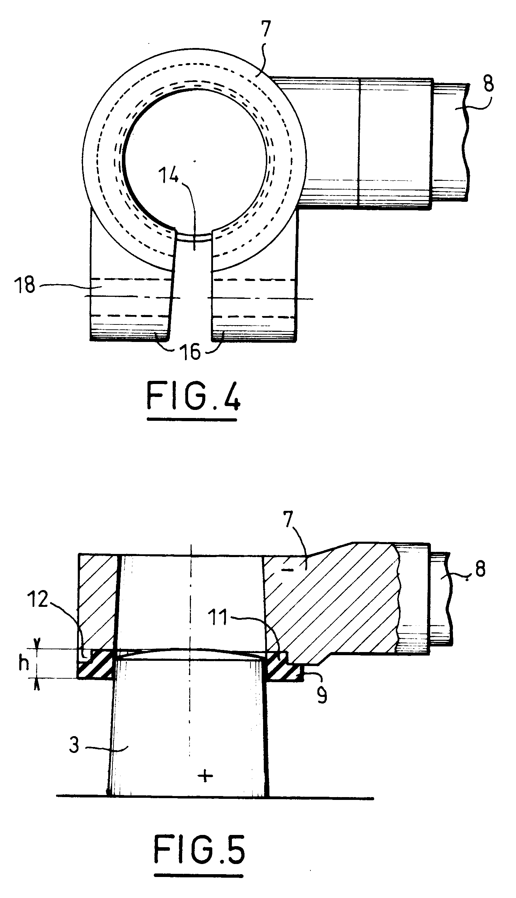

L'opérateur va alors tenter de mettre en place la douille négative sur la borne positive de la batterie 1. C'est ce qui est représenté sur les figures 4 et 5 où l'on voit la douille négative 7 branchée sur son câble de mise à la masse 8 mise en place sur la borne positive 3 de la batterie 1. On s'aperçoit que, bien qu'elle ne puisse s'engager complètement, la douille 7 vient cependant en contact avec la partie supérieure de la borne positive 3. On a défini sur la figure 5 la hauteur h de pénétration de la douille 7 sur la borne 3.

Conformément à l'invention, la douille de petit diamètre 7 comporte à sa partie inférieure une garniture isolante 9. Cette garniture isolante 9 est fixée sur la partie inférieure de la douille 7 et s'étend sur une hauteur qui est au moins égale à la hauteur de pénétration h précitée.

De cette manière, on évite toute possibilité de connexion électrique entre la douille négative 7 et la borne positive 3 de la batterie 1.

La garniture 9 est en fait constituée par une rondelle qui présente un épaulement 11 qui vient se loger dans un épaulement de forme correspondante aménagé dans la partie inférieure 12 de la douille 7 de petit diamètre.

La rondelle 9 est fixée sur la douille par tout moyen, en particulier par emboîtement.

Dans l'exemple représenté, les douilles de connexion 4 et 7 sont des douilles à serrage qui présentent une fente 13, respectivement 14 et qui comportent deux branches de serrage 15, respectivement 16 disposées de part et d'autre de la fente précitée. Ces deux branches 15, 16 présentent des trous 17 respectivement 18 alignés destinés au passage d'un boulon de serrage.

Dans ce cas, la garniture 9 est également fendue au niveau de la fente 14.

On voit que l'invention interdit toute possibilité de branchement incorrect de la batterie sur son circuit d'utilisation.

La description ci-dessus n'a été fournie qu'à titre d'exemple nullement limitatif et il est évident que l'on peut y apporter des modifications ou variantes sans pour autant sortir du cadre de la présente invention.

## Revendications

1. Ensemble de deux connecteurs comportant des douilles (4,7) à profil intérieur tronconique et destinés au branchement d'un circuit électrique sur un générateur électrochimique (1) de courant continu qui comporte deux cosses tronconiques (2,3) dont l'une (3) a un diamètre supérieur au diamètre de l'autre (2), caractérisé en ce que la douille (7) du connecteur destiné au branchement sur la cosse (2) de plus faible diamètre comporte une garniture isolante (9) qui est fixée sur sa partie inférieure (12) et qui s'étend sur une hauteur au moins égale à la hauteur (h) de pénétration de la douille de petit diamètre (7) sur la cosse de grand diamètre (3).

2. Ensemble de connecteurs selon la revendication 1, caractérisé en ce que ladite garniture isolante (9) est constituée par une rondelle.

3. Ensemble de connecteurs selon la revendication 2, caractérisé en ce que le profil intérieur de la rondelle (9) est en alignement avec le profil intérieur de la douille.

4. Ensemble de connecteurs selon la revendication 2 ou 3, caractérisé en ce que la partie inférieure (12) de la douille de petit diamètre (7) présente un épaulement intérieur dans lequel est logée la rondelle (9).

5. Ensemble de connecteurs selon l'une quelconque des revendications 2 à 4, caractérisé en ce que la douille (7) est une bague de serrage fendue et en ce que la rondelle (9) est fendue.

## Patentansprüche

1. Anordnung mit zwei Steckverbindern, die Fassungen bzw. Hülsen (4, 7) mit einem kegelstumpfförmigen Innenprofil aufweisen und zum Anschließen einer elektrischen Schaltung an einen elektrochemischen Gleichstromerzeuger (1) dienen, der zwei kegelstumpfförmige Klemmen (2, 3) aufweist, von denen eine (3) einen größeren Durchmesser als die andere (2) besitzt, dadurch gekennzeichnet, daß die Fassung bzw. Hülse (7) des zum Anschließen an die Klemme (2) mit dem geringeren Durchmesser dienenden Steckverbinders einen isolierenden Aufsatz (9) aufweist, der am unteren Teil (12) der Fassung bzw. Hülse befestigt ist und sich über eine Höhe erstreckt, die mindestens der Eindringtiefe (h) der Klemme (3) mit dem grßeen Durchmesser in die Fassung bzw. Hülse mit dem kleinen Durchmesser (7) entspricht.

2. Steckverbinderanordnung nach Anspruch 1, dadurch gekennzeichnet, daß der isolierende Aufsatz (9) durch eine Unterlegscheibe gebildet ist.

3. Steckverbinderanordnung nach Anspruch 2, dadurch gekennzeichnet, daß das Innenprofil der Unterlegscheibe (9) mit dem Innenprofil der Fassung bzw. Hülse ausgerichtet ist.

4. Steckverbinderanordnung nach Anspruch 2 oder 3, dadurch gekennzeichnet, daß der untere Teil (12) der Fassung bzw. Hülse (7) mit kleinem Durchmesser einen inneren Absatz aufweist, in dem die unterlegscheibe (9) angeordnet ist.

5. Steckverbinderanordnung nach einem der Ansprüche 2 bis 4, dadurch gekennzeichnet, daß die Fassung bzw. Hülse (7) ein geteilter Spannring ist und daß die Unterlegscheibe (9) geteilt ist.

## Claims

1. Set of two connectors including sockets (4, 7) having a frustoconical interior profile and which are intended for the connection of an electrical circuit to an electrochemical direct-current generator (1) which includes two frustoconical terminals (2, 3) one (3) of which has a diameter which is greater than the diameter of the other (2), characterized in that the socket (7) of the connector intended for connection to the terminal (2) of smaller diameter includes an insulating lining (9) which is fixed to its lower part (12) and which extends over a height at least equal to the height (h) to which the small-diameter socket (7) penetrates the large-diameter terminal (3).

2. Set of connectors according to Claim 1, characterized in that the said insulating lining (9) consists of a washer.

3. Set of connectors according to Claim 2, characterized in that the internal profile of the washer (9) is in alignment with the internal profile of the socket.

4. Set of connectors according to Claim 2 or 3, characterized in that the lower part (12) of the smaller-diameter socket (7) has an internal shoulder in which the washer (9) is housed.

5. Set of connectors, according to any one of Claims 2 to 4, characterized in that the socket (7) is a split clamping ring and in that the washer (9) is split.
